# EUROPEAN PATENT APPLICATION

(11) **EP 1 832 182 A1**
(43) Date of publication of application: **12.09.2007**
(21) Application number: 07103738.6
(22) Date of filing: 08.03.2007
(51) Int. Cl.: A23L 2/46, A23L 2/66, A23L 3/3526

(54) **Method for improving microbial and flavor stabilities of beverages**

(30) Priority: 09.03.2006 US 371851
(71) Applicant: KRAFT FOODS HOLDINGS, INC., Northfield, Illinois 60093 (US)
(72) Inventor: Zheng, Zuoxing, Palatine, IL 60074 (US); Tolbert, Latricia L., Oak Park, IL 60304 (US); Semanchek, Jeffrey, Ramsey, NJ 07446 (US); Huang Anshun, Florham Park, NJ 07932 (US)
(74) Representative: Smaggasgale, Gillian Helen

(57) **Abstract**

A method for preparing a shelf stable beverage is provided that includes blending ε-poly-L-lysine with a beverage and then pasteurizing at lower temperatures without a need of ultra high temperature treatment. The method is effective for providing a shelf stable beverage with improved microbial stability and better color and flavor quality than beverages processed at ultra high temperatures normally required for shelf stability.

## Description

The invention is directed to a method for making shelf stable beverages which is effective for preventing growth of microbiological contaminants in beverages with reduced heat treatment. More specifically, the method includes adding low levels of ε-L-lysine to beverages which is effective for making shelf stable products without employing ultra high temperature treatment normally required for microbial stability. The beverages containing the low levels of ε-poly-L-lysine may be subsequently processed at lower temperatures than ultra high temperatures without spoilage concerns. The low processing temperature treatment in the presence of low levels of ε-polylysine results in beverages having improved microbial stability, better color and flavor quality than beverages processed at the ultra high temperatures normally used due to spoilage concerns.

### BACKGROUND

Present food technologists utilize an array of physical, chemical, and biological processes and agents to preserve food. Many chemical compositions exist which kill or inhibit deleterious bacteria and/or other microbes thereby preserving food and beverages and preventing spoilage.

Food preservation by inhibition of growth of microbiological contaminants is often difficult and is often done with the use of chemical compositions. A chemical composition added to foods should be effective for preventing increases in microbial numbers and should not add undesirable flavors or undesirable organoleptic properties to the food.

The antimicrobial effect of ε-poly-L-lysine is well-known. More specifically, ε-poly-L-lysine is known to have some effect in delaying the growth of certain bacteria and fungi to some extent under certain conditions. For example, ε-poly-L-lysine has been used for making antimicrobial fabrics which can be used as food wrapper or container by kneading it together with the fabrics or directly spraying it on the fabrics (U.S. Patent No. 5,759,844). Methods of producing ε-poly-L-lysine and its use are described in U.S. Patent No. 6,294,183 ("Antimicrobial Resin Composition and Antimicrobial Resin Molded Article Comprising Same"); U.S. Patent No. 5,294,552 ("Strain mass-producing ε-poly-L-lysine"); U.S. Patent No. 5,434,060 ("Method for Producing ε-poly-L-lysine"); U.S. Patent No. 5,759,844 ("Antibacterial Articles and Methods of Producing the Articles"); U.S. Patent No. 5,900,363 ("Process for producing ε-poly-L-lysine with immobilized *Streptomyces albulus");* U.S. Patent No. 5,453,420 ("Food preservative and production thereof"); U.S. Patent No. 5,009,907 ("Method for Treating Food to Control the Growth of Yeasts"); U.S. Patent No. 4,597,972 ("Nisin as an Antibotulinal Agent for Food Products"); and U.S. Patent No. 4,584,199 ("Antibotulinal Agents for High Moisture Process Cheese Products"). These patents are incorporated herein by reference in their entireties.

The acid resistant and heat resistant bacteria such as spore-former *Alicyclobacillus acidoterrestris* has been a common spoilage organism for fruit-juice-containing ready-to-drink beverages. Controlling the growth of *A. acidoterrestris* in such beverages continues to be a big challenge in the beverage industry today. Production of a shelf-stable fruit juice-containing beverage generally requires ultra high temperature (UHT) to inactivate spores. Such temperature will not only increase the capital and operating costs, but also cause flavor problems in the beverages. A need exists for compositions which can be added to beverages which are effective for preserving the beverage and preventing spoilage without the need of UHT treatment while not adversely affecting the taste and physical properties of the beverage.

### SUMMARY

Ready-to-drink (RTD) beverages are formulated with an amount of ε-poly-L-lysine effective for improving microbial stability and flavor quality. By formulating a natural fermentation product, ε-poly-lysine, into RTD beverages, the growth of spoilage organisms such as thermophilic, acid-resistant and spore-former bacteria *Alicyclobacillus acidoterrestris* is effectively eliminated or inhibited in the beverage. The beverage may be subsequently processed with regular pasteurization temperatures instead of ultra high temperature treatment. Lower temperature processing significantly improves the color and flavor qualities of the beverage due to higher retention of natural flavor and color, minimized decomposition of the thermal liable flavor compounds and reduced formation of undesirable flavor in the beverage.

The method as claimed is effective for preventing a reduction in volatile flavor compounds as compared to levels of volatile flavor compounds in beverages that did not contain ε-poly-L-lysine and which were heated to a temperature of greater than 240°F. In this aspect, the method is effective for reducing volatile flavor compounds in RTD beverages less than about 10%, in an important aspect, less than about 5%, and in another aspect, about 0%, as compared to RTD beverages heated at temperatures greater than about 240°F without ε-poly-L-lysine.

In another aspect, the method is effective for preventing the formation of off-flavor compounds. In this aspect, the method is effective for reducing formation of off-flavor compounds by at least about 40%, in an important aspect, about 50% and in a very important aspect about 60%, and in another important aspect greater than about 90%, as compared to RTD beverages heated at temperatures greater than about 240°F without ε-poly-L-lysine.

In another aspect, the method is effective for enhancing color retention in RTD beverages. In this aspect, the color of RTD beverages processed in accordance the present invention was similar to the color of unprocessed RTD beverages.

RTD beverages are blended with about 5 ppm to about 100 ppm ε-poly-L-lysine, preferably about 10 ppm to about 50 ppm ε-poly-L-lysine. The RTD beverage is then heated to a temperature of about 200°F to about 210°F. The inclusion of ε-poly-L-lysine allows for the lower pasteurization temperatures of about 200°F to about 210°F. The combination of ε-poly-L-lysine and lower pasteurization temperature is effective for making a shelf stable beverage and/or eliminating spoilage microorganisms. Such combination is effective for reducing and/or preventing an increase in microbial counts in beverages of about 4 log or less after about 16 days, in an important aspect about 2 log or less after about 10 days, in another aspect about 1 log or less after about 10 days, all at a storage temperature of about 113°F.

### DETAILED DESCRIPTION

Formulating ε-poly-lysine into RTD beverages at relatively low concentrations inhibits spore regrowth such as the growth of spores of *Alicyclobacillus acidoterrestris* in the beverages, without the need for severe heat treatment to make a shelf stable beverage. This provides significant cost advantage and quality improvement for the beverages, as the processing temperature can be changed from UHT to regular pasteurization temperature. The color and flavor quality of the RTD beverages formulated with ε-poly-lysine was significantly improved.

### Definitions

"Food preservation", as that term is used herein, includes methods which delay or prevent food spoilage due to microbes. Food preservation keeps food safe for consumption and inhibits or prevents nutrient deterioration or organoleptic changes causing food to become less palatable.

"Food spoilage", as that term is used herein, includes any alteration in the condition of food which makes it less palatable including changes in taste, smell, texture or appearance. "Ultra High Temperatures" or "UHT" refers to processing at temperatures of 240°F to about 250°F. "Pasteurization" refers to about 200°F to about 210°F.

As used herein, "shelf stable beverage" or "shelf stable beverages" means that the beverage has no increase in microbial growth after storage at room temperature (25°C) for at least about 4 weeks, preferably at least about 8 weeks.

As used herein, "eliminating spoilage microorganisms" means that less than 1 cfu/ml of spoilage organisms are detected in a beverage after storage at room temperature (25°C) for at least about 6 days, preferably at least about 10 days, and more preferably at least about 16 days.

As used herein, "volatile flavor compounds" refers to compounds such as ethyl acetate, ethyl butyrate, ethyl 2-methyl butyrate, 2-methyl butyl acetate, beta-pinene, butyl-2-methyl isobutyrate, ethyl caproate, hexyl acetate, octanal, leaf alcohol, nonanal, trans-2-hexenol, ethyl caprylate, p-dimethyl styrene, heptanol, furfural, 2-ethyl hexanol, decanal, benzaldehyde, 4-terpineol, dihydrovarvone, beta-terpinol, alpha-terpineol, citral (neral, geranial), beta-citronellol, damacenone, carveol, geraniol, caprylic acid and gamma-decalactone. These compounds alone or in combination provide desirable flavor components to the RTD beverage.

"Off-flavor compounds" refers to compounds formed during heat treatment such as sugar degradation products. "Sugar degradation products" refers to undesirable volatile compounds which form with heat treatment of sugars. An example of a sugar degradation product includes furfanol. An example of an off flavor compound includes para-dimethyl styrene.

### Ready-to-Drink Beverages

Ready-to-drink (RTD) beverages may include high acid, juice containing beverages such as fruit punch, and 100% fruit juice beverages such as apple juice, as well as high acid, non-juice containing beverages such as sport drinks.

### ε-poly-L-lysine

ε-poly-lysine is a polymer of L-lysine produced by *Streptomyces albulus* through natural fermentation, and it has limited applications as a preservative in several ready-to-eat food products such as cooked rice and sushi for shelf life extension. Since it is fungistatic and bacteriostatic, it is generally intended for limited shelf life extension of selected food products.

ε-poly-L-lysine can be used as a free type or a salt type of an inorganic acid such as hydrochloric acid, sulfuric acid or phosphoric acid, or an organic acid such as acetic acid, propionic acid, fumaric acid, malic acid or citric acid. Both types of these salts of inorganic acids and organic acids as well as a free type have similar antibacterial effect. The ε-poly-L-lysine has the structure 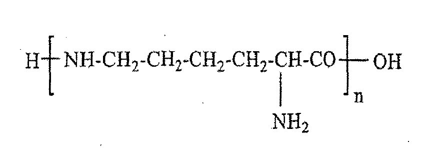 where n is about 25 to about 35.

ε-Poly-L-lysine is available under the tradename Save-ory^{™} GK128 from Chisso Corporation in Japan. This commercial preparation contains 1.0% ε-poly-L-lysine as the active antimicrobial agent, 30% glycerin, 68.8% water, a trace amount of organic acids for pH adjustment, and emulsifier. Save-ory^{™} products have been used in sushi and cooked rice for shelf-life extension in Japan.

### EXAMPLES

### Example 1- Preparation of Alicyclobacillus acidoterrestris spores

A strain of *A. acidoterrestris* isolated from a fruit juice-containing beverage was incubated on acidified potato dextrose agar (PDA, pH adjusted to 3.5 with tartaric acid) at 45°C for 5-7 days. The resulting cells and spores on the PDA plate were then harvested by washing with 10 ml of sterile water. The suspension was centrifuged at 5,000 rpm for 10 min. The supernatant was poured off and the precipitate was re-suspended in 10 ml of sterile water and the washing cycle was repeated. After 2-3 washing cycles, the cell and spore suspension was heated in a water bath at 80°C for 10 min to eliminate vegetative cells. After heat shock, the spore suspension was cooled in an ice/water bath to ambient temperature, and was serially diluted to the desired concentrations for inoculation studies. The spore concentration was determined by plate count on the acidified PDA plate incubated aerobically at 45°C for 2-3 days.

### Example 2 - Inhibition of A. acidoterrestris in a fruit juice-containing beverage at high inoculation level

A beverage was provided that contained 10% mixed fruit juices with a pH of 3.5 and no preservatives. The *A. acidoterrestris* spores prepared in Example 1 were inoculated into the beverage at an inoculation level of ~1x10⁴ spores/ml. The beverage samples contained various levels of ε-poly-L-lysine as indicated in Table 1. The ε-poly-L-lysine used in the experiment was obtained from Chisso Corporation as a liquid product Save-ory GK128 that contains 1% ε-poly-L-lysine. After about two weeks of incubation at 45°C the control had *A. acidoterrestris* grown to 8×10⁴ cfu/ml, while the samples containing 20 and 50 ppm ε-poly-L-lysine (0.2% and 0.5% GK128, respectively) had 3-4 log lower cell count compared to control. The sample with 50 ppm ε-polylysine also had 3 log reduction in 10 days compared to the initial inoculation level.

**Table 1. Inhibition of A. acidoterrestris in a fruit juice-containing beverage at high inoculation levels**

| Treatment | Day 0 | Day 2 | Day 6 | Day 10 | Day 16 |
|---|---|---|---|---|---|
| ***Control*** | 8.3x10³ | 9.7x10³ | 1.8x10⁵ | 1.0x10⁵ | 8.0x10⁴ |
| ***0 ppm polylysine*** | | | | | |
| 5 ppm polylysine | 8.1x10³ | 9.5x10³ | 1.6x10⁵ | 1.1x10⁵ | 3.1x10⁴ |
| 10 ppm polylysine | 6.4x10³ | 7.4x10³ | 2.7x10⁵ | 8.9x10⁴ | 1.2x10⁴ |
| 20 ppm polylysine | 6.2x10³ | 6.8x10¹ | 1.7x10² | 1.6x10¹ | 1.4x10¹ |
| 50 ppm polylysine | 7.7x10³ | 4.0x10¹ | 1.6x10² | 8 | 7 |

| | | | | | |
|---|---|---|---|---|---|
| Note: All numbers are in cfu/ml. | | | | | |

### Example 3 - Inhibition of A. acidoterrestris in a fruit juice-containing beverage at low inoculation levels

The *A. acidoterrestris* spores prepared in Example 1 were inoculated into the fruit juice-containing beverage described in Example 2 at a target level of 10 spores/ml. The beverage samples contained various concentrations of GK128 as described in Example 2. After incubation at 45°C for about 2 weeks, the control had *A. acidoterrestris* grown to 8x10⁴ cfu/ml while the samples containing 20 and 50 ppm ε-poly-L-lysine (0.2% and 0.5% GK128, respectively) did not have live cells detected (Table 2).

**Table 2. Inhibition of A. acidoterrestris in a fruit juice-containing beverage at lower inoculation levels**

| Treatment | Day 0 | Day 2 | Day 6 | Day 10 | Day 16 |
|---|---|---|---|---|---|
| ***Control*** | 2.0x10¹ | 6.6x10² | 1.9x10⁵ | 1.1x10⁵ | 8.0x10⁴ |
| ***0 ppm polylysine*** | | | | | |
| 5 ppm polylysine | 2.0x10¹ | 5.0x10³ | 6,1x10⁴ | 5.8x10⁴ | 4.9x10⁴ |
| 10 ppm polylysine | 2.0x10¹ | 2.0x10³ | 1.3x10⁴ | 6.3x10³ | 6.2x10³ |
| 20 ppm polylysine | 2.0x10¹ | <1 | <1 | <1 | <1 |
| 50 ppm polylysine | 2.0x10¹ | <1 | <1 | <1 | <1 |

| | | | | | |
|---|---|---|---|---|---|
| Note: All numbers are in cfu/ml | | | | | |

### Example 4 - Inhibition of A. acidoterrestris in a non juice-containing beverage

A beverage was provided that did not contain fruit juice but contained fruit flavor, had a pH of 3.5 and did not contain any preservatives. The beverage was made of water, high fructose corn syrup, sugar, citric acid, sodium citrate and potassium citrate and small amount of natural fruit flavor. The *A. acidoterrestris* spores made in Example 1 were inoculated at the target level of 10⁴ spares/ml into the beverage which contained ε-poly-lysine at the concentration levels ranging between 5 and 50 ppm. After the samples were incubated at 45°C for about 2 weeks, the control had *A. acidoterrestris* at the 10⁴ cfu/ml while all the polylysine-containing samples had less than 10 cfu/ml (Table 3).

**Table 3. Inhibition of A. acidoterrestris in a non juice-containing beverage**

| Treatment | Day 0 | Day 2 | Day 6 | Day 10 | Day 16 |
|---|---|---|---|---|---|
| ***Control*** | | | | | |
| 0 ppm polylysine | 7.2x10³ | 2.1x10² | 1.3x10⁵ | 8.3x10⁴ | 2.6x10⁴ |
| 5 ppm polylysine | 7.9x10³ | 3.1x10² | 3.0x10¹ | 2.1x10¹ | |
| 10 ppm polylysine | 7,9x10³ | 5.5x10² | 7.0x10¹ | 3.8x10¹ | 4 |
| 20 ppm polylysine | 8.0x10³ | 2.9x10² | 1.2x10² | 5.9x10¹ | 3 |
| 50 ppm polylysine | 6.8x10³ | 4.9x10² | 1.4x10² | 6.7x10¹ | 6 |

| | | | | | |
|---|---|---|---|---|---|
| All numbers are in cfu/ml | | | | | |

### Example 5 - Microbial stability of a fruit juice-containing beverage prepared with reduced heat treatment

The current fruit juice-containing beverage as described in Example 2 is produced with ultra high temperature treatment (UHT, 243°F for 1.3-6 seconds). To test the feasibility of reducing the process temperature with the use of ε-polylysine, a pilot plant trial was run with the following variables: 1) Control (no polylysine, heat treatment at 243°F, hot fill), 2) Reduced heat treatment (30 ppm polylysine or 0.3% GK128, heat treatment at 205°F, cold fill). After storage for 4 and 8 weeks, total microbial count was conducted in both samples. The results suggest that the reduced heat-treated sample was as microbial stable as the UHT-treated control (Table 4).

**Table 4. Microbial stability of a juice-containing beverage prepared with reduced heat treatment and UHT treatment**

| Treatment | 4 weeks | 8 weeks |
|---|---|---|
| ***No polylysine, heat 243 °F, hot fill*** | No growth | No growth |
| 30 ppm polylysine, heat 205°F, cold fill | No growth | No growth |

### Example 6 - Color improvement of a fruit juice-containing beverage with added polylysine and reduced heat

The fruit juice-containing beverages were prepared as in the Example 5. After storage at ambient temperature for 8 weeks, the color of the treatment sample was significantly superior to the control.

The color of these samples was evaluated in comparison with the original unprocessed juice beverage by Hunter Lab color measurement and their respective L, a, b values are listed in Table 5. The L value represents transparency of the sample. The positive a value means red and negative value is green. The positive b value is yellow and negative value means blue. The data in Table 5 suggest that the low heat treatment, cold filled, polylysine-containing sample (C) had more intense red color and less yellow color than the regular hot filled product (B). The differences in these values compared to the unprocessed sample (A) were expressed as delta values (ΔL, Δa and Δb). These values indicate how close the processed products were to the unprocessed sample in color. The data show that sample C was less transparent but its color was closer to sample A than sample B (Table 5). These results suggest that the polylysine treated sample had a better color retention than the currently UHT processed product.

**Table 5. Hunter Lab color measurement of fruit juice-containing beverage samples**

| Sample | L value (ΔL) | a value (Δa) | b value (Δb |
|---|---|---|---|
| ***A. Unprocessed, no heat*** | 10.48 (0) | 0.76 (0) | -1.23 (0) |
| ***B. No polylysine, heat 243°F, hot fill*** | 9.11 (-1.37) | 0.35 (-0.41) | 0.15 (+1.38) |
| C. 30ppm polylysine, heat 205°F, cold fill | 7.24 (-3.24) | 0.78 (+0.02) | 0.06 (+1.29) |

### Example 7 - Flavor improvement of a fruit juice-containing beverage with added polylysine and reduced heat

Three fruit juice-containing beverage samples were prepared as follows. Sample A (control), No polylysine, heat treated to 243°F, hot filled; Sample B, 30 ppm polylysine (0.3% GK128), heated to 243°F, hot filled; Sample C, 30 ppm polylysine, heated to 205°F, cold filled. After initial storage at ambient temperature for 4 weeks, all samples were tasted by a trained sensory panel to compare the flavor quality. The sensory evaluation results suggest that the polylysine-containing sample with reduced heat treatment had superior appearance, color and taste over the control sample. To further quantify the flavor benefits of the treatment, a comprehensive flavor characterization test was conducted after 8 weeks of storage.

Each sample was freeze concentrated to increase the flavor concentration, and the flavor isolation was done by Solid Phase Micro Extraction (SPME) at 40°C for 30 minutes. The flavor components were identified by GC-MS and were quantified by GC-FID. The flavor compounds identified for flavor stability evaluation in the beverage included ethyl acetate, ethyl butyrate, ethyl 2-methyl butyrate, 2-methyl butyl acetate, beta-pinene, butyl-2-methyl isobutyrate, ethyl caproate, hexyl acetate, octanal, leaf alcohol, nonanal, trans-2-hexenol, ethyl caprylate, p-dimethyl styrene, heptanol, furfural, 2-ethyl hexanol, decanal, benzaldehyde, 4-terpineol, dihydrovarvone, beta-terpinol, alpha-terpineol, citral (neral, geranial), beta-citronellol, damacenone, carveol, geraniol, caprylic acid and gamma-decalactone.

The loss of volatile flavor compounds in the beverage samples was determined by comparing their relative concentrations. The concentration of each compound in the polylysine-treated sample was set to 100% and the UHT-treated control sample was compared to the treatment sample to obtain relative concentration of the flavor compound. The relative concentrations of some key volatile flavor compounds (esters) in the polylysine treated sample and the control is shown in Table 6.

**Table 6. Relative concentrations of volatile compounds in fruit juice-containing beverage samples**

| Sample | Ethyl acetate | Ethyl butyrate | Ethyl 2-methyl butyrate | Ethyl caproate | Ethyl caprylate |
|---|---|---|---|---|---|
| ***A. No polylysine, 243 °F, hot fill*** | 49 | 74 | 77 | 75 | 78 |
| ***B. Polylysine, 243°F, hot fill*** | 56 | 76 | 80 | 86 | 89 |
| C. Polylysine, 205°F, cold fill | 100 | 100 | 100 | 100 | 100 |

Clearly sample A had much less retention of volatile compounds than sample C (Table 6). These volatile compounds are important components of the fruit juice-containing beverages. The polylysine treatment with reduced heat process significantly increased the retention of volatile flavor compounds, and therefore improved the flavor quality of the beverage.

Some known heat-sensitive flavor compounds such as neral, citronellol and geranial were degraded during stack burn of hot filled beverages. The relative concentrations of these compounds in the samples were listed in Table 7. The UHT-treated sample (A) lost about 80-90% of these flavor compounds as compared to the polylysine-containing sample with reduced heat treatment (C). Neral and geranial are key citral aroma compounds and they are responsible for the fresh lemon smell. Formulating polylysine in the beverage could reduce the heat treatment and therefore improve the flavor quality of the product.

**Table 7. Relative concentrations of thermal liable flavor compounds in fruit juice-containing beverage**

| Sample | Neral | Citronellol | Geranial |
|---|---|---|---|
| ***A. No polylysine, 243 °F, hot fill*** | 11 | 23 | 11 |
| C. Polylysine, 205°F, cold fill | 100 | 100 | 100 |

The heat treatment also resulted in sugar degradation. The sugar degradation produced undesirable volatile compounds such as furfural. The concentration of furfural in the samples was also measured. The UHT-treated product produced more than two times the amount of furfural than the product with reduced heat treatment (Table 8). Higher concentrations of furfural could contribute jammy-like and burnt sugar-like flavor. By formulating polylysine the product could be processed at lower temperature. This significantly reduced the formation of undesirable flavor compounds such as furfural, and therefore improved the flavor quality of the beverage.

**Table 8. Relative concentrations of heat-induced undesirable volatile compound in fruit juice-containing beverage**

| Sample | Furfural |
|---|---|
| ***A. No polylysine, 243 °F, hot fill*** | 234 |
| C. Polylysine, 205°F, cold fill | 100 |

In addition, the product with reduced heat treatment also minimized the formation of other off-flavor compounds. For example, an off-flavor compound para-dimethyl styrene was detected in the UHT-treated and hot filled product but not detected in the polylysine-containing sample with reduced heat-treatment. The para-dimethyl styrene is known degradation product of citral under high temperature in a low pH environment. It has a gasoline-like or turpentine off-flavor.

## Claims

1. A method for preparing a ready-to-drink beverage comprising:
blending about 5 ppm to about 100 ppm ε-poly-L-lysine to a beverage composition; and
pasteurizing the beverage containing the ε-poly-L-lysine at a temperature of from about 200°F to about 210°F,
the method effective for reducing and/or preventing an increase in microbial counts of about 4 log or less after about 16 days at a storage temperature of about 113°F.

2. The method of claim 1 wherein the method is effective for reducing and/or preventing an increase in microbial counts in the ready-to-drink beverage of about 2 logs or less after about 10 days at a storage temperature of about 113°F.

3. The method of claim 1 wherein the method is effective for reducing and/or preventing an increase in microbial counts of about 1 log or less after about 10 days at a storage temperature of about 113°F.

4. The method of any one of claims 1 to 3 wherein the ε-poly-L-lysine has the structure 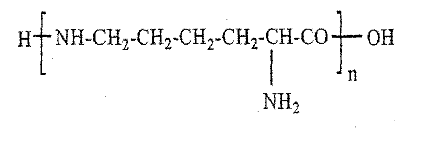 wherein n is about 25 to about 35

5. A method for producing a shelf stable ready-to-drink beverage comprising:
blending about 5 ppm to about 100 ppm ε-poly-L-lysine to a beverage composition; and
pasteurizing the beverage containing the ε-poly-L-lysine at a temperature of from about 200°F to about 210°F.

6. The method of any one of claims 1 to 5 wherein the method is effective for preventing an increase in microbial growth in the ready-to-drink beverage after four weeks at a storage temperature of about 25°C.

7. A method effective for eliminating spoilage microorganisms from a ready-to drink beverage comprising:
blending about 5 ppm to about 100 ppm ε-poly-L-lysine to a beverage composition; and
pasteurizing the beverage containing the ε-poly-L-lysine at a temperature of from about 200°F to about 210°F.

8. The method of any one of claims 1 to 4 or 7 wherein the method is effective for providing a ready-to-drink beverage with less than about 1 cfu/ml of spoilage microorganisms after storage at 25°C for about 6 days.

9. The method of any one of claims 1 to 8 wherein the beverage composition is selected from the group consisting of high acid, fruit juice or juice-containing beverages and high acid, non-juice containing beverages.

10. The method of any one of claims I to 9 wherein 10 ppm to about 50 ppm ε-poly-L-lysine is added to the beverage composition.

11. The method of any one of claims 1 to 10 wherein the method is effective for preventing a reduction in levels of desirable fruit volatile flavor compounds of less than about 10% as compared to levels of volatile flavor compounds in beverages that did not contain ε-poly-L-lysine and which were heated at a temperature greater than 240°F.

12. The method of any one of claims 1 to 11 wherein the method is effective for reducing formation of off-flavor compounds by at least about 40% as compared to beverages that did not contain ε-poly-L-lysine and which were heated at a temperature greater than 240°F.
